# EUROPEAN PATENT APPLICATION

(11) **EP 4 286 032 A1**
(43) Date of publication of application: **06.12.2023**
(21) Application number: 21923042.2
(22) Date of filing: 20.10.2021
(51) Int. Cl.: B01D 53/04, B01J 20/26

(54) **DESULFURIZING DEVICE**

(30) Priority: 29.01.2021 JP 2021012564
(71) Applicant: Panasonic Intellectual Property Management Co., Ltd., Osaka 571-0057 (JP)
(72) Inventor: TAGUCHI, Kiyoshi, Kadoma-shi Osaka 571-0057 (JP); KUSUYAMA, Takahiro, Kadoma-shi Osaka 571-0057 (JP); HARADA, Chie, Kadoma-shi Osaka 571-0057 (JP); OTA, Tomohiro, Kadoma-shi Osaka 571-0057 (JP); SUZUKI, Motohiro, Kadoma-shi Osaka 571-0057 (JP)
(74) Representative: Grünecker Patent- und Rechtsanwälte PartG mbB
(86) International application number: PCT/JP2021/038698
(87) International publication number: WO 2022/163036

(57) **Abstract**

A desulfurizing device (21) includes: a flow path through which a hydrocarbon fuel containing a sulfur compound flows; a first desulfurizing agent filled into a first desulfurizer (1); a second desulfurizing agent filled into a second desulfurizer (2); a cooler (4); and a heater (3). The first desulfurizing agent is disposed in the flow path, and includes a metal-organic framework including a copper ion and an organic ligand, and configured to remove at least a part of the sulfur compound contained in the hydrocarbon fuel. The second desulfurizing agent is disposed downstream of the first desulfurizing agent in the flow direction of the hydrocarbon fuel in the flow path, and configured to remove carbonyl sulfide out of the sulfur compound contained in the hydrocarbon fuel. The cooling unit (4) is configured to cool the first desulfurizing agent to a temperature equal to or higher than the dew point of the hydrocarbon fuel and equal to or lower than a temperature at which deterioration of the first desulfurizing agent is substantially prevented. The heater (3) is configured to heat the second desulfurizing agent to a temperature equal to or higher than a temperature that allows the second desulfurizing agent to remove the carbonyl sulfide contained in the hydrocarbon fuel.

## Description

### BACKGROUND

### 1. Technical Field

The present disclosure relates to a desulfurizing device configured to remove a sulfur compound from a hydrocarbon fuel.

### 2. Description of the Related Art

Patent Literature 1 discloses a configuration for removing a sulfur compound from a hydrocarbon fuel including the sulfur compound by using a metal-organic framework including a copper ion and an organic ligand.

Patent Literature 2 discloses a desulfurizing device including: a first desulfurizing agent configured to remove a sulfur compound contained in a hydrocarbon fuel; and a second desulfurizing agent disposed downstream of the first desulfurizing agent and configured to remove carbonium sulfide included in the hydrocarbon fuel.

### Citation List

Patent Literature 1: WO 2017/150019
Patent Literature 2: Japanese Unexamined Patent Application Publication No. 2015-135789

### SUMMARY

The present disclosure provides a desulfurizing device capable of substantially preventing a decrease in the adsorption performance of a first desulfurizing agent due to deterioration caused by water at high temperatures, substantially preventing a decrease in the carbonyl sulfide adsorption performance of a second desulfurizing agent, and reducing the amount of the desulfurizing agents and the size of the desulfurizing device.

The desulfurizing device according to the present disclosure includes: a flow path through which a hydrocarbon fuel including a sulfur compound flows; a first desulfurizing agent disposed in the flow path; a second desulfurizing agent disposed downstream of the first desulfurizing agent in the flow direction of the hydrocarbon fuel in the flow path; a cooling unit; and a heater.

The first desulfurizing agent includes a metal-organic framework including a copper ion and an organic ligand and is configured to remove at least a part of the sulfur compound from the hydrocarbon fuel.

The second desulfurizing agent is configured to remove carbonyl sulfide out of the sulfur compound from the hydrocarbon fuel.

The cooling unit is configured to cool the first desulfurizing agent to a temperature equal to or higher than the dew point of the hydrocarbon fuel and equal to or lower than a temperature at which deterioration of the first desulfurizing agent is substantially prevented.

The heater is configured to heat the second desulfurizing agent to a temperature equal to or higher than a temperature that allows the second desulfurizing agent to remove the carbonyl sulfide from the hydrocarbon fuel.

The desulfurizing device according to the present disclosure is capable of substantially preventing a decrease in the adsorption performance of the first desulfurizing agent due to deterioration caused by water at high temperatures, capable of substantially preventing a decrease in the carbonyl sulfide adsorption performance of the second desulfurizing agent, and capable of reducing the amount of the desulfurizing agents and the size of the desulfurizing device.

### BRIEF DESCRIPTION OF THE DRAWINGS

FIG. 1 is a block diagram illustrating the configuration of a desulfurizing device in Embodiment 1.
FIG. 2 is a block diagram illustrating the configuration of a desulfurizing device in Embodiment 2.
FIG. 3 is a block diagram illustrating the configuration of a desulfurizing device in Embodiment 3.
FIG. 4 is a block diagram illustrating the configuration of a desulfurizing device in Embodiment 4.

### DETAILED DESCRIPTIONS

### (Underlying Knowledge Forming Basis of the Present Disclosure)

Since the inventors came up with the present disclosure, there has been known a desulfurizing device configured to remove sulfur compounds from a hydrocarbon fuel including the sulfur compounds by using a metal-organic framework including a copper ion and an organic ligand. This desulfurizing device is capable of simply and effectively removing the sulfur compounds included in the hydrocarbon fuel.

In addition, there has been known a desulfurizing device including: a first desulfurizing agent configured to remove tetrahydrothiophene (hereinafter, referred to as THT) which is a part of sulfur compounds included in a hydrocarbon fuel; and a second desulfurizing agent disposed downstream of the first desulfurizing agent and configured to remove carbonyl sulfide included in the hydrocarbon fuel. This desulfurizing device is capable of effectively removing the carbonyl sulfide out of the sulfur compounds included in the fuel gas by using the second desulfurizing agent.

However, when the hydrocarbon fuel includes water and the temperature is high, the structure of the metal-organic framework including the copper ion and the organic ligand can be destroyed by the water. Hence, there is a problem that, when the metal-organic framework including the copper ion and the organic ligand is used as the first desulfurizing agent, the sulfur compound adsorption performance of the first desulfurizing agent decreases.

Furthermore, there is another problem that, when the temperature decreases, the carbonyl sulfide adsorption performance of the second desulfurizing agent configured to remove carbonyl sulfide decreases.

Therefore, the present disclosure provides a desulfurizing device capable of substantially preventing a decrease in the adsorption performance of the first desulfurizing agent due to deterioration caused by water at high temperatures, capable of substantially preventing a decrease in the carbonyl sulfide adsorption performance of the second desulfurizing agent, and capable of reducing the amount of the desulfurizing agents and the size of the desulfurizing device.

Hereinafter, embodiments will be described in detail with reference to the drawings. However, the following description may not include unnecessary details. For example, the description may not include details of already known matters or repeated reference to substantially identical constituents.

Note that the accompanying drawings and the following description are only presented to help those skilled in the art fully understand the present disclosure, and it is therefore not intended that subject matters described in the scope of the appended claims be limited by the drawings and the description herein.

### (Embodiment 1)

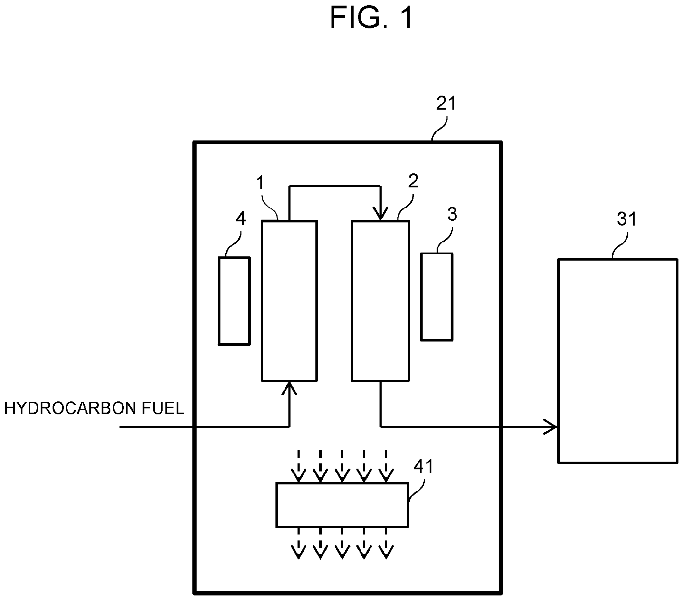

Hereinafter, desulfurizing device 21 in Embodiment 1, which is an example of a desulfurizing device according to the present disclosure, will be described with reference to FIG. 1.

### [1-1. Configuration]

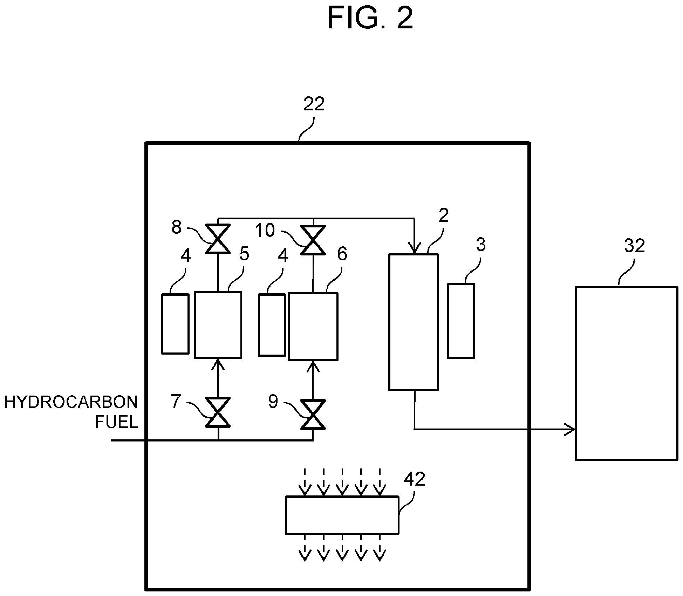

FIG. 1 is a block diagram illustrating the configuration of desulfurizing device 21 in Embodiment 1. Note that, in FIG. 1, a flow path through which a hydrocarbon fuel including sulfur compounds flows is indicated by an arrow. The same goes for FIG. 2 to FIG. 4 described later. As illustrated in FIG. 1, desulfurizing device 21 includes first desulfurizer 1, second desulfurizer 2, heater 3, cooler 4, and controller 41. Desulfurizing device 21 is configured in such a manner that the hydrocarbon fuel supplied to desulfurizing device 21 from the outside is desulfurized with first desulfurizer 1 and second desulfurizer 2, and then supplied to fuel-consuming apparatus 31.

First desulfurizer 1 is disposed at some midpoint in the flow path through which the hydrocarbon fuel including the sulfur compounds flows.

The hydrocarbon fuel in Embodiment 1 is city gas containing methane as a main component and includes THT and carbonyl sulfide as the sulfur compounds. The hydrocarbon fuel further includes 1% by volume of water vapor.

First desulfurizer 1 is filled with a first desulfurizing agent that removes mainly THT out of the sulfur compounds included in the hydrocarbon fuel.

In Embodiment 1, a metal-organic framework including a copper ion and benzene-1,3,5-tricarboxylic acid, namely, HKUST-1 (manufactured by BASF) is used as an example of the first desulfurizing agent according to the present disclosure.

Second desulfurizer 2 is filled with a second desulfurizing agent that removes carbonyl sulfide out of the sulfur compounds included in the hydrocarbon fuel. As illustrated in FIG. 1, second desulfurizer 2 is disposed downstream of first desulfurizer 1 in the flow direction of the hydrocarbon fuel in the flow path.

In Embodiment 1, a metal oxide including nickel and copper and configured to remove carbonyl sulfide is used as an example of the second desulfurizing agent according to the present disclosure.

Heater 3 is a heater configured to heat second desulfurizer 2 to a temperature equal to or higher than a temperature that allows the second desulfurizing agent to remove carbonyl sulfide included in the hydrocarbon fuel.

Cooler 4 is a cooling fan configured to cool first desulfurizer 1 to a temperature equal to or higher than the dew point of the hydrocarbon fuel and equal to or lower than a temperature at which deterioration of the first desulfurizing agent is substantially prevented.

Controller 41 is configured to control the operation of desulfurizing device 21. Controller 41 includes a signal input-and-output unit (not illustrated), a computing processor (not illustrated), and a memory (not illustrated) configured to store a control program. In other words, controller 41 includes a computer system including a processor and a memory. When the processor executes a control program stored in the memory, the computer system functions as controller 41. Herein, the control program to be executed by the processor is stored in advance in the memory of the computer system, but may be stored in a non-transitory recording medium such as a memory card and provided, or may be provided via a telecommunication line such as the Internet.

Desulfurizing device 21 is covered with a casing (not illustrated).

### [1-2. Operation]

The operation of desulfurizing device 21 configured as described above will be described below.

Controller 41 controls the entirety of desulfurizing device 21 including heater 3 and cooler 4 to perform the following operation.

First, a hydrocarbon fuel is supplied to first desulfurizer 1. The conditions of the hydrocarbon fuel in Embodiment 1 are such that the flow rate is 3 NL/min, the temperature is 25°C, the water vapor concentration is 1% by volume, the concentration of a sulfur compound, THT, is 10 ppm, the concentration of a sulfur compound, carbonyl sulfide, is 0.1 ppm.

First desulfurizer 1 removes mainly THT out of the sulfur compounds included in the hydrocarbon fuel. After passing through first desulfurizer 1, the hydrocarbon fuel is supplied to second desulfurizer 2. Second desulfurizer 2 removes carbonyl sulfide that has not been removed by first desulfurizer 1.

The temperature of second desulfurizer 2 is controlled, for example, at 60°C by heater 3.

The temperature of first desulfurizer 1 is controlled, for example, at 25°C by cooler 4.

After the hydrocarbon fuel passes through second desulfurizer 2, the sulfur compound concentration of the hydrocarbon fuel reaches 1 ppb or lower, and the hydrocarbon fuel is supplied to fuel-consuming apparatus 31.

Hereinafter, there will be described results obtained by changing the temperatures of first desulfurizer 1 and second desulfurizer 2 and periodically measuring the hydrocarbon fuel located downstream of second desulfurizer 2 by gas chromatography.

First, in Example 1, as in the case of desulfurizing device 21 in Embodiment 1, the temperature of first desulfurizer 1 was controlled at 25°C and the temperature of second desulfurizer 2 was controlled at 60°C, and the hydrocarbon fuel located downstream of second desulfurizer 2 was periodically measured by gas chromatography. In Example 1, after the passage of 1000 h following the start of a test, an increase in the concentrations of THT and carbonyl sulfide was detected in a downstream part of the flow path.

Next, in Comparative Example 1, an operation was started in such a manner that cooler 4 was stopped, first desulfurizer 1 was controlled at 60°C, and second desulfurizer 2 was controlled at 60°C.

In Comparative Example 1, when the hydrocarbon fuel located downstream of second desulfurizer 2 was periodically measured by gas chromatography, an increase in the concentration of THT was detected in a downstream part of the flow path after the passage of 500 h following the start of a test. That is, in Comparative Example 1 in which the temperature (60°C) of first desulfurizer 1 was higher than the temperature (25°C) of first desulfurizer 1 in Example 1, a decrease in the adsorption performance of the first desulfurizing agent due to deterioration caused by water at high temperatures was observed after the passage of a comparatively short time (500 h).

In Comparative Example 1, an operation was started in such a manner that heater 3 was stopped, first desulfurizer 1 was controlled at 25°C, and second desulfurizer 2 was controlled at 25°C.

In Comparative Example 2, when the hydrocarbon fuel located downstream of second desulfurizer 2 was periodically measured by gas chromatography, an increase in the concentration of carbonyl sulfide was detected in a downstream part of the flow path from the start of test after the passage of 100 h following the start of a test. That is, in Comparative Example 2 in which the temperature (25°C) of second desulfurizer 2 was lower than the temperature (60°C) of second desulfurizer 2 in Example 1, a decrease in the carbonyl sulfide adsorption performance of the second desulfurizing agent was observed after the passage of a comparatively short time (100 h).

Furthermore, when the first desulfurizing agent was taken out after the test and the BET surface area of the first desulfurizing agent was measured, the BET surface area of the first desulfurizing agent in the case of the operation performed under the condition that the temperature of first desulfurizer 1 was 25°C (Comparative Example 2) was 90% of an initial-stage BET surface area, meanwhile the BET surface area of the first desulfurizing agent in the case of the operation performed under the condition that the temperature of first desulfurizer 1 was 60°C (Comparative Example 1) was 50% of an initial-stage BET surface area,

### [1-3. Effects]

As described above, desulfurizing device 21 in Embodiment 1 includes the flow path through which the hydrocarbon fuel including the sulfur compounds flows, the first desulfurizing agent, the second desulfurizing agent, cooler 4, and heater 3.

The first desulfurizing agent is filled into first desulfurizer 1 disposed in the flow path, and includes the metal-organic framework including the copper ion and the organic ligand, and is configured to remove at least a part of the sulfur compounds included in the hydrocarbon fuel.

The second desulfurizing agent is disposed downstream of the first desulfurizing agent in the flow direction of the hydrocarbon fuel in the flow path, the first desulfurizing agent being filled into first desulfurizer 1, and is configured to remove carbonyl sulfide out of the sulfur compounds included in the hydrocarbon fuel.

Cooler 4 is an example of the cooling unit according to the present disclosure, and is configured to cool the first desulfurizing agent to a temperature equal to or higher than the dew point of the hydrocarbon fuel and equal to or lower than a temperature at which deterioration of the first desulfurizing agent is substantially prevented.

Heater 3 is configured to heat the second desulfurizing agent to a temperature equal to or higher than a temperature that allows the second desulfurizing agent to remove carbonyl sulfide included in the hydrocarbon fuel.

Thus, desulfurizing device 21 can substantially prevent a decrease in the adsorption performance of the first desulfurizing agent due to deterioration caused by water at high temperatures and substantially prevent a decrease in the carbonyl sulfide adsorption performance of the second desulfurizing agent. Therefore, desulfurizing device 21 can reduce the amount of the desulfurizing agents and the size of desulfurizing device 21 can be reduced.

### (Embodiment 2)

Hereinafter, with reference to FIG. 2, desulfurizing device 22 in Embodiment 2 as an example of the desulfurizing device according to the present disclosure will be described mainly in terms of differences between desulfurizing device 22 in Embodiment 2 and desulfurizing device 21 in Embodiment 1.

### [2-1. Configuration]

FIG. 2 is a block diagram illustrating the configuration of desulfurizing device 22 in Embodiment 2. As illustrated in FIG. 2, desulfurizing device 22 in Embodiment 2 is different from desulfurizing device 21 in Embodiment 1 in that desulfurizing device 22 includes third desulfurizer 5 and fourth desulfurizer 6 disposed in parallel to each other, instead of first desulfurizer 1. Furthermore, desulfurizing device 22 is different from desulfurizing device 21 in that desulfurizing device 22 includes first on-off valve 7 and second on-off valve 8 disposed upstream and downstream of third desulfurizer 5, respectively, and third on-off valve 9 and fourth on-off valve 10 disposed upstream and downstream of fourth desulfurizer 6, respectively. Furthermore, desulfurizing device 22 is different from desulfurizing device 21 in that desulfurizing device 22 includes controller 42, instead of controller 41.

Furthermore, desulfurizing device 22 is different from desulfurizing device 21 in that desulfurizing device 22 is connected to hydrogen generator 32, instead of fuel-consuming apparatus 31 in Embodiment 1.

Desulfurizing device 22 is configured to desulfurize a hydrocarbon fuel supplied to desulfurizing device 22 from the outside by using either third desulfurizer 5 or fourth desulfurizer 6 and second desulfurizer 2 and then supply the desulfurized hydrocarbon fuel to hydrogen generator 32. That is, desulfurizing device 22 includes first on-off valve 7, second on-off valve 8, third on-off valve 9, and fourth on-off valve 10 (hereinafter, also referred to as the on-off valves) that cause the hydrocarbon fuel to flow through any one of third desulfurizer 5 and fourth desulfurizer 6. While causing the hydrocarbon fuel to flow through any one of third desulfurizer 5 and fourth desulfurizer 6 (for example, third desulfurizer 5), the opening and closing of the on-off valves are controlled by controller 42 so as not to allow the hydrocarbon fuel to flow through the other desulfurizer (for example, fourth desulfurizer 6).

Furthermore, each of third desulfurizer 5 and fourth desulfurizer 6 is filled with the first desulfurizing agent identical to that of first desulfurizer 1 in Embodiment 1, in half the amount of the first desulfurizing agent filled into first desulfurizer 1. In other words, the total amount of the first desulfurizing agent used in the desulfurizing device 22 in Embodiment 2 is the same as the amount of the first desulfurizing agent used in desulfurizing device 21 in Embodiment 1.

### [2-2. Operation]

The operation of desulfurizing device 22 configured as described above will be described below.

Controller 42 controls the entirety of desulfurizing device 22 including heater 3, cooler 4, and the on-off valves to perform the following operation.

At the start of the operation, first on-off valve 7 and second on-off valve 8 are open and third on-off valve 9 and fourth on-off valve 10 are closed, whereby the hydrocarbon fuel is supplied to third desulfurizer 5.

As in the case of Embodiment 1, the conditions of the hydrocarbon fuel in Embodiment 2 are such that the flow rate is 3 NL/min, the temperature is 25°C, the water vapor concentration is 1% by volume, the concentration of a sulfur compound, THT, is 10 ppm, the concentration of a sulfur compound, carbonyl sulfide, is 0.1 ppm.

After the passage of 550 h from the start of the operation, first on-off valve 7 and second on-off valve 8 are closed and third on-off valve 9 and fourth on-off valve 10 are opened so that the hydrocarbon fuel is supplied to fourth desulfurizer 6.

Here, the time of 550 h is a time period predetermined by a test in which the concentration of THT increases in a portion located downstream of third desulfurizer 5.

The temperature of second desulfurizer 2 is controlled, for example, at 60°C by heater 3.

The temperatures of third desulfurizer 5 and fourth desulfurizer 6 are controlled, for example, at 25°C by cooler 4.

In Example 2, as in the case of desulfurizing device 22 in Embodiment 2, the temperatures of third desulfurizer 5 and fourth desulfurizer 6 were controlled at 25°C and the temperature of second desulfurizer 2 was controlled at 60°C, and the hydrocarbon fuel located downstream of second desulfurizer 2 was periodically measured by gas chromatography. As a result, in Example 2, an increase in the concentrations of THT and carbonyl sulfide was detected in a downstream part of the flow path after the passage of 1100 h from the start of the test. That is, in Example 2, without changing the amount of the first desulfurizing agent used, the amount of time elapsed from the start of the test to the detection of the increase in the concentrations of THT and carbonyl sulfide in the downstream part was longer than that in Example 1. That is, compared with Example 1, it was observed in Example 2 that a decrease in the adsorption performance of the first desulfurizing agent due to deterioration caused by water at high temperatures and a decrease in the carbonyl sulfide adsorption performance of the second desulfurizing agent were more effectively substantially prevented.

### [2-3. Effects]

As described above, in Embodiment 2, desulfurizing device 22 in Embodiment 2 includes the flow path through which the hydrocarbon fuel including the sulfur compounds flows, the first desulfurizing agent, the second desulfurizing agent, cooler 4, and heater 3.

The first desulfurizing agent is filled into third desulfurizer 5 and fourth desulfurizer 6 disposed in parallel to each other in the flow path, and includes the metal-organic framework including the copper ion and the organic ligand, and is configured to remove at least a part of the sulfur compounds included in the hydrocarbon fuel.

The second desulfurizing agent is disposed downstream of the first desulfurizing agent in the flow direction of the hydrocarbon fuel in the flow path, the first desulfurizing agent being filled into third desulfurizer 5 and fourth desulfurizer 6, and is configured to remove carbonyl sulfide out of the sulfur compounds included in the hydrocarbon fuel.

Cooler 4 is an example of the cooling unit according to the present disclosure, and is provided to each of third desulfurizer 5 and fourth desulfurizer 6 and configured to cool the first desulfurizing agent to a temperature equal to or higher than the dew point of the hydrocarbon fuel and equal to or lower than a temperature at which deterioration of the first desulfurizing agent is substantially prevented.

Heater 3 is configured to heat the second desulfurizing agent to a temperature equal to or higher than a temperature that allows the second desulfurizing agent to remove carbonyl sulfide included in the hydrocarbon fuel.

Thus, desulfurizing device 22 can substantially prevent a decrease in the adsorption performance of the first desulfurizing agent due to deterioration caused by water at high temperatures and substantially prevent a decrease in the carbonyl sulfide adsorption performance of the second desulfurizing agent. Therefore, desulfurizing device 22 can reduce the amount of the desulfurizing agents and the size of desulfurizing device 22 can be reduced.

As in the case of Embodiment 2, in desulfurizing device 22 third desulfurizer 5 and fourth desulfurizer 6 each filled with the first desulfurizing agent are disposed in parallel to each other. Desulfurizing device 22 includes first on-off valve 7, second on-off valve 8, third on-off valve 9, and fourth on-off valve 10 as an example of switching valves according to the present disclosure that allows the hydrocarbon fuel to flow through at least one of third desulfurizer 5 and fourth desulfurizer 6. During the supply of the hydrocarbon fuel to at least one of third desulfurizer 5 and fourth desulfurizer 6, first on-off valve 7, second on-off valve 8, third on-off valve 9, and fourth on-off valve 10 do not allow the hydrocarbon fuel to flow through the other desulfurizer except the at least one desulfurizer.

Specifically, desulfurizing device 22 includes: first on-off valve 7 disposed upstream of third desulfurizer 5 in a branched flow path for third desulfurizer 5; and second on-off valve 8 disposed downstream of third desulfurizer 5 in the branched flow path for third desulfurizer 5. Desulfurizing device 22 further includes: third on-off valve 9 disposed upstream of fourth desulfurizer 6 in another branched flow path for fourth desulfurizer 6; and fourth on-off valve 10 disposed downstream of fourth desulfurizer 6 in the branched flow path for fourth desulfurizer 6.

In this case, first on-off valve 7, second on-off valve 8, third on-off valve 9, and fourth on-off valve 10 are opened and closed so that the hydrocarbon fuel flows through either third desulfurizer 5 or fourth desulfurizer 6.

For example, during the flow of the hydrocarbon fuel through third desulfurizer 5 (during the supply of the hydrocarbon fuel to third desulfurizer 5), first on-off valve 7 and second on-off valve 8 are open and third on-off valve 9 and fourth on-off valve 10 are closed, whereby the hydrocarbon fuel is not allowed to flow through fourth desulfurizer 6.

In contrast, during the flow of the hydrocarbon fuel through fourth desulfurizer 6 (during the supply of the hydrocarbon fuel to fourth desulfurizer 6), third on-off 9 and fourth on-off valve 10 are open and first on-off valve 7 and second on-off valve 8 are closed, whereby the hydrocarbon fuel is not allowed to flow through third desulfurizer 5.

Thus, desulfurizing device 22 can substantially prevent a decrease in the adsorption performance of the first desulfurizing agent due to deterioration caused by water at high temperatures, the first desulfurizing agent being filled into the desulfurizer through which the hydrocarbon fuel does not flow, whereby the loading of a surplus first desulfurizing agent generated owing to the adsorption performance decrease becomes unnecessary. Therefore, desulfurizing device 22 can reduce the amount of the desulfurizing agents, and the size of desulfurizing device 22 can be reduced.

### (Embodiment 3)

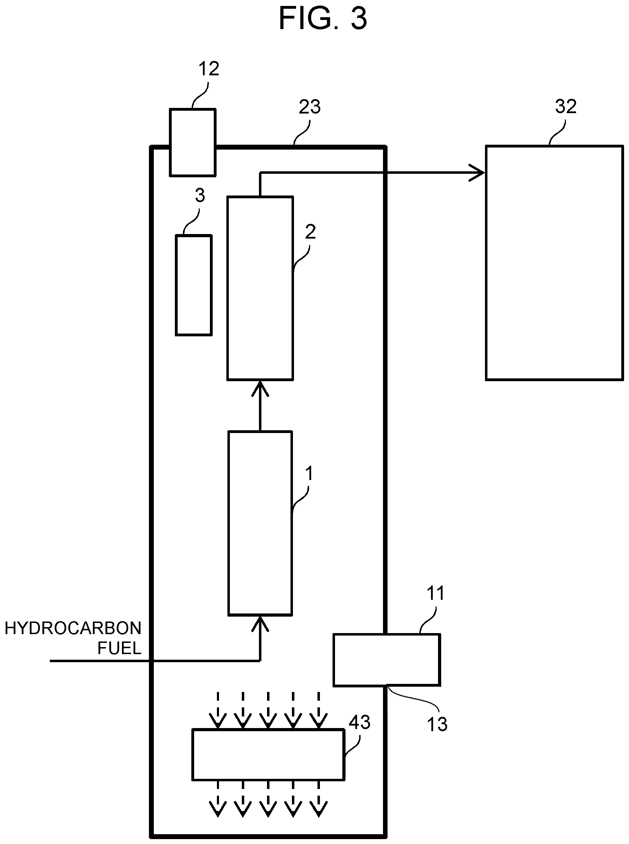

Hereinafter, with reference to FIG. 3, desulfurizing device 22 in Embodiment 3 as an example of the desulfurizing device according to the present disclosure will be described mainly in terms of differences between desulfurizing device 22 in Embodiment 3 and desulfurizing device 21 in Embodiment 1.

### [3-1. Configuration]

FIG. 3 is a block diagram illustrating the configuration of desulfurizing device 23 in Embodiment 3. Note that, hereinafter, the vertical direction in a state where desulfurizing device 23 is availably installed (the state being equivalent to an installation state in the present disclosure) is sometimes referred to as the up-and-down direction.

As illustrated in FIG. 3, desulfurizing device 23 in Embodiment 3 is different from desulfurizing device 21 in Embodiment 1 in that desulfurizing device 23 includes air inlet fan 11, air outlet port 12, and air inlet port 13, instead of cooler 4. Furthermore, desulfurizing device 23 is different from desulfurizing device 21 in that first desulfurizer 1 is disposed at a lower position in the up-and-down direction (the vertical direction) in the installation state of desulfurizing device 23 than second desulfurizer 2, and desulfurizing device 23 includes controller 43, instead of controller 41.

Furthermore, desulfurizing device 23 is different from desulfurizing device 21 in that desulfurizing device 23 is connected to hydrogen generator 32, instead of fuel-consuming apparatus 31 in Embodiment 1.

Desulfurizing device 23 is configured to desulfurize the hydrocarbon fuel supplied to desulfurizing device 23 from the outside by using first desulfurizer 1 and second desulfurizer 2 and then supply the desulfurized hydrocarbon fuel to hydrogen generator 32.

Desulfurizing device 23 is covered with a casing and thereby isolated from the outside air, and therefore, desulfurizing device 23 is higher in temperature than the outside air because of the internal heat. It is assumed that, while the temperature of the outside air is 25°C, the temperature of the inside of desulfurizing device 23 is 60°C, for example.

The casing is provided with air inlet port 13 for taking in the outside air, and air outlet port 12 for discharging air inside the casing (air inside desulfurizing device 23) to the outside of the casing (the outside of desulfurizing device 23). Air inlet fan 11 is a fan disposed in air inlet port 13 and operating to take in the outside air through air inlet port 13. Air inlet fan 11 is configured to cool the first desulfurizing agent to a temperature (for example, 25°C) equal to or higher than the dew point of the hydrocarbon fuel and equal to or lower than a temperature at which deterioration of the first desulfurizing agent is substantially prevented.

Air inlet fan 11 (air inlet port 13) is located at a lower position in the up-and-down direction (the vertical direction) in the installation state of desulfurizing device 23 than first desulfurizer 1. Air outlet port 12 is located at an upper position in the up-and-down direction (the vertical direction) in the installation state of desulfurizing device 23 than second desulfurizer 2. As described above, first desulfurizer 1 is located at the lower position in the up-and-down direction (the vertical direction) in the installation state of desulfurizing device 23 than second desulfurizer 2. That is, air inlet fan 11 (air inlet port 13), air outlet port 12, and first desulfurizer 1 are disposed so that the outside air having been taken into desulfurizing device 23 by air inlet fan 11 cools first desulfurizer 1 and is then discharged through air outlet port 12 to the outside of the casing of desulfurizing device 23.

### [3-2. Operation]

The operation of desulfurizing device 23 configured as described above will be described below.

Controller 43 controls the entirety of desulfurizing device 23 including air inlet fan 11 to perform the following operation.

The temperature of first desulfurizer 1 is controlled, for example, at 25°C by air inlet fan 11.

Other operations are the same as in Embodiment 1, and descriptions thereof will be therefore omitted.

### [3-3. Effects]

As described above, in Embodiment 3, desulfurizing device 23 includes the flow path through which the hydrocarbon fuel including the sulfur compounds flows, the first desulfurizing agent, the second desulfurizing agent, air inlet port 13, air inlet fan 11, air outlet port 12, and heater 3, in which air inlet port 13, air inlet fan 11, air outlet port 12 constitute an example of the cooling unit according to the present disclosure.

The first desulfurizing agent is filled into first desulfurizer 1 disposed in the flow path, and includes the metal-organic framework including the copper ion and the organic ligand, and is configured to remove at least a part of the sulfur compounds included in the hydrocarbon fuel.

The second desulfurizing agent is filled into second desulfurizer 2 disposed downstream of first desulfurizer 1 in the flow direction of the hydrocarbon fuel in the flow path, and is configured to remove carbonyl sulfide out of the sulfur compounds included in the hydrocarbon fuel.

Air inlet fan 11 is configured to cool the first desulfurizing agent to a temperature equal to or higher than the dew point of the hydrocarbon fuel and equal to or lower than a temperature at which deterioration of the first desulfurizing agent is substantially prevented.

Heater 3 is configured to heat the second desulfurizing agent to a temperature equal to or higher than a temperature that allows the second desulfurizing agent to remove carbonyl sulfide included in the hydrocarbon fuel.

Thus, desulfurizing device 23 can substantially prevent a decrease in the adsorption performance of the first desulfurizing agent due to deterioration caused by water at high temperatures and substantially prevent a decrease in the carbonyl sulfide adsorption performance of the second desulfurizing agent. Therefore, desulfurizing device 23 can reduce the amount of the desulfurizing agents and the size of desulfurizing device 23 can be reduced.

As described in Embodiment 3, desulfurizing device 23 further includes the casing to be isolated from the outside air, and includes air inlet port 13, air outlet port 12, and air inlet fan 11 as the cooling unit. To take in the outside air, air inlet port 13 is disposed in the casing. To discharge air inside the casing to the outside of the casing, air outlet port 12 is disposed in the casing. Air inlet fan 11 is disposed in air inlet port 13 and operates to take in the outside air through air inlet port 13.

In desulfurizing device 23, the first desulfurizing agent filled into first desulfurizer 1 is located at a lower position in the up-and-down direction in the installation state of desulfurizing device 23 than the second desulfurizing agent filled into second desulfurizer 2. Air inlet port 13 (air inlet fan 11) is located at a lower position in the up-and-down direction in the installation state of desulfurizing device 23 than the first desulfurizing agent filled into first desulfurizer 1.

Thus, desulfurizing device 23 can comparatively efficiently cool the first desulfurizing agent with the comparatively simple configuration and substantially prevent a decrease in the temperature of the second desulfurizing agent. Therefore, desulfurizing device 23 of reduced size can be provided at a comparatively low cost.

### (Embodiment 4)

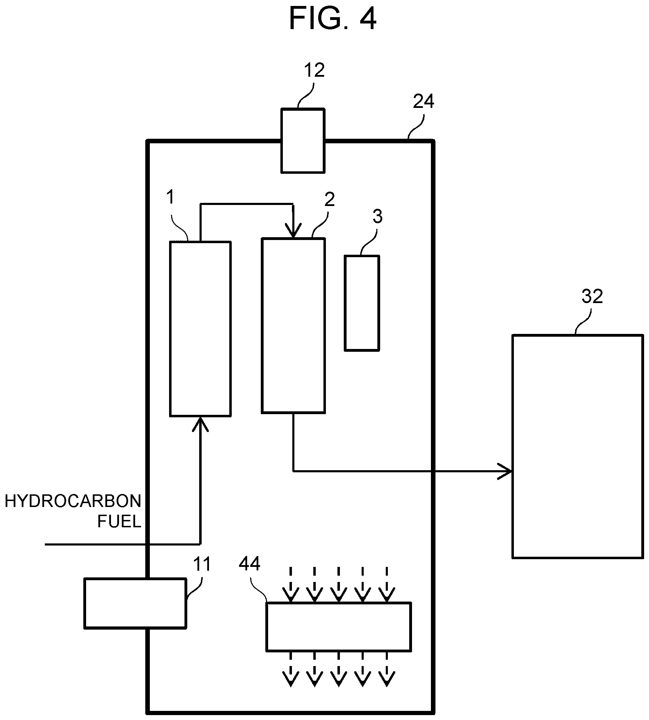

Hereinafter, with reference to FIG. 4, desulfurizing device 24 in Embodiment 4 as an example of the desulfurizing device according to the present disclosure will be described mainly in terms of differences between desulfurizing device 24 in Embodiment 4 and desulfurizing device 23 in Embodiment 3.

### [4-1. Configuration]

FIG. 4 is a block diagram illustrating the configuration of desulfurizing device 24 in Embodiment 4. As illustrated in FIG. 4, desulfurizing device 24 in Embodiment 4 is different from desulfurizing device 23 in Embodiment 3 in that first desulfurizer 1 is disposed closer to the casing than second desulfurizer 2 and desulfurizing device 24 includes controller 44 instead of controller 43.

### [4-2. Operation]

The operation of desulfurizing device 24 configured as described above will be described below.

Controller 44 controls the entirety of desulfurizing device 24 including air inlet fan 11 to perform the following operation.

The temperature of first desulfurizer 1 is controlled, for example, at 25°C by air inlet fan 11.

Other operations are the same as those in Embodiment 1, and therefore descriptions thereof will be omitted.

### [4-3. Effects]

As described above, desulfurizing device 24 in Embodiment 4 includes the flow path through which the hydrocarbon fuel including the sulfur compounds flows, the first desulfurizing agent, the second desulfurizing agent, air inlet port 13, air inlet fan 11, air outlet port 12, and heater 3, in which air inlet port 13, air inlet fan 11, air outlet port 12 constitute an example of the cooling unit according to the present disclosure.

The first desulfurizing agent is filled into first desulfurizer 1 disposed in the flow path, and includes the metal-organic framework including the copper ion and the organic ligand, and is configured to remove at least a part of the sulfur compounds included in the hydrocarbon fuel.

The second desulfurizing agent is filled into second desulfurizer 2 disposed downstream of first desulfurizer 1 in the flow direction of the hydrocarbon fuel in the flow path, and is configured to remove carbonyl sulfide out of the sulfur compounds included in the hydrocarbon fuel.

Air inlet fan 11 is configured to cool the first desulfurizing agent to a temperature equal to or higher than the dew point of the hydrocarbon fuel and equal to or lower than a temperature at which deterioration of the first desulfurizing agent is substantially prevented.

Heater 3 is configured to heat the second desulfurizing agent to a temperature equal to or higher than a temperature that allows the second desulfurizing agent to remove carbonyl sulfide included in the hydrocarbon fuel.

Thus, desulfurizing device 24 can substantially prevent a decrease in the adsorption performance of the first desulfurizing agent due to deterioration caused by water at high temperatures and substantially prevent a decrease in the carbonyl sulfide adsorption performance of the second desulfurizing agent. Therefore, desulfurizing device 24 can reduce the amount of the desulfurizing agents and the size of desulfurizing device 24 can be reduced.

As described in Embodiment 4, desulfurizing device 24 further includes the casing so as to be isolated from the outside air, and includes air inlet port 13, air outlet port 12, and air inlet fan 11 as a cooling unit. To take in the outside air, air inlet port 13 is disposed in the casing. To discharge air inside the casing to the outside of the casing, air outlet port 12 is disposed in the casing. Air inlet fan 11 is disposed in air inlet port 13 and operates to take in the outside air through air inlet port 13.

Furthermore, in desulfurizing device 24, the first desulfurizing agent filled into first desulfurizer 1 is disposed closer to the casing than the second desulfurizing agent filled into second desulfurizer 2.

Thus, desulfurizing device 24 can comparatively efficiently cool the first desulfurizing agent with the comparatively simple configuration and substantially prevent a decrease in the temperature of the second desulfurizing agent. Therefore, desulfurizing device 24 of reduced size can be provided at a comparatively low cost.

### (Other Embodiments)

Hereinbefore, Embodiments 1 to 4 were described as illustrative examples of the technology in the present disclosure. However, the technology in the present disclosure is not limited to the embodiments, and is also applicable to embodiments in which modifications, substitutions, additions, omissions, or the like are made. In addition, the constituents described in Embodiments 1 to 4 can be combined to provide a new embodiment.

Other embodiments will be described below.

In Embodiments 1 to 4, city gas containing methane as a main component was illustrated as the hydrocarbon fuel in the present disclosure, but, liquefied petroleum gas (LPG) or natural gas may be used.

Furthermore, THT was illustrated as the sulfur compound in the present disclosure, but dimethylsulfide or tertiary-butylmercaptan, which is used as an odorant added to city gas, may be used.

In Embodiment 2, as the desulfurizers according to the present disclosure disposed in parallel to each other and filled with the first desulfurizing agent, two desulfurizers, namely, third desulfurizer 5 and fourth desulfurizer 6 were illustrated, but three or more desulfurizers may be used. Note that, in the desulfurizing device in this modification, every additional desulfurizer needs to include two on-off valves.

Furthermore, in Embodiment 2, as the switching valves according to the present disclosure, four on-off valves, namely, first on-off valve 7, second on-off valve 8, third on-off valve 9, and fourth on-off valve 10 were illustrated, but a two-way valve may be used, for example. In the desulfurizing device including three or more desulfurizers in the above-mentioned modification, for example, a multiple-way valve may be used in accordance with the number of the desulfurizers.

Note that Embodiments 1 to 4 and other exemplary embodiments described above are merely for illustrating the technology in the present disclosure, and therefore, the embodiments may be subjected to various modifications, substitutions, additions, omissions, or the likes within the scope of the claims and their equivalents.

### INDUSTRIAL APPLICABILITY

The present disclosure is applicable to a desulfurizing device for removing a sulfur compound in a hydrocarbon fuel. Specifically, the present disclosure is applicable to, for example, a fuel cell system and a hydrogen production device that are equipped with a hydrogen generator configured to generate hydrogen from city gas or LPG.

### REFERENCE MARKS IN THE DRAWINGS

- 1: first desulfurizer
- 2: second desulfurizer
- 3: heater
- 4: cooler
- 5: third desulfurizer
- 6: fourth desulfurizer
- 7: first on-off valve
- 8: second on-off valve
- 9: third on-off valve
- 10: fourth on-off valve
- 11: air inlet fan
- 12: air outlet port
- 13: air inlet port
- 21: desulfurizing device
- 22: desulfurizing device
- 23: desulfurizing device
- 24: desulfurizing device
- 31: fuel-consuming apparatus
- 32: hydrogen generator
- 41: controller
- 42: controller
- 43: controller
- 44: controller

## Claims

1. A desulfurizing device, comprising:
a flow path through which a hydrocarbon fuel including a sulfur compound flows;
a first desulfurizing agent
disposed in the flow path,
including a metal-organic framework, the metal-organic framework including a copper ion and an organic ligand, and
configured to remove at least a part of the sulfur compound from the hydrocarbon fuel;
a second desulfurizing agent
disposed downstream of the first desulfurizing agent in a flow direction of the hydrocarbon fuel in the flow path, and
configured to remove carbonyl sulfide out of the sulfur compound from the hydrocarbon fuel;
a cooling unit configured to cool the first desulfurizing agent to a temperature, the temperature being equal to or higher than a dew point of the hydrocarbon fuel and equal to or lower than a temperature at which deterioration of the first desulfurizing agent is substantially prevented; and
a heater configured to heat the second desulfurizing agent to a temperature, the temperature being equal to or higher than a temperature that allows the second desulfurizing agent to remove the carbonyl sulfide from the hydrocarbon fuel.

2. The desulfurizing device according to claim 1, further comprising:
a plurality of desulfurizers filled with the first desulfurizing agent and disposed in parallel to each other; and
a switching valve configured to allow the hydrocarbon fuel to flow through at least one of the plurality of desulfurizers,
wherein, during the allowing the hydrocarbon fuel to flow through the at least one of the plurality of desulfurizers, the switching valve does not allow the hydrocarbon fuel to flow through desulfurizers other than the at least one of the plurality of desulfurizers among of the plurality a desulfurizers.

3. The desulfurizing device according to claim 1 or 2, further comprising:
a casing configured to isolate the desulfurizing device from outside air,
wherein the cooling unit includes:
an air inlet port disposed in the casing to take in the outside air;
an air outlet port disposed in the casing to discharge air inside the casing to outside of the casing; and
an air inlet fan configured to operate to take in the outside air through the air inlet port.

4. The desulfurizing device according to claim 3, wherein
the first desulfurizing agent is located lower than the second desulfurizing agent in a vertical direction in an installation state of the desulfurizing device, and
the air inlet port is located lower than the first desulfurizing agent in the vertical direction in the installation state of the desulfurizing device.

5. The desulfurizing device according to claim 3, wherein
the first desulfurizing agent is disposed closer to the casing than the second desulfurizing agent.
